# EUROPEAN PATENT APPLICATION

(11) **EP 0 951 160 A2**
(43) Date of publication of application: **20.10.1999**
(21) Application number: 99105734.0
(22) Date of filing: 22.03.1999
(51) Int. Cl.: H04M 1/02

(54) **Apparatus and method to provide a wireless telephone with no dial pad**

(30) Priority: 16.04.1998 US 61795
(71) Applicant: Siemens Information and Communication Networks, Inc., Boca Raton, Florida 33487 (US)
(72) Inventor: Lester, Leland, Austin, TX 78748 (US); Iglehart, David, Austin, TX 78704 (US)
(74) Representative: Allen, Derek

(57) **Abstract**

An electronic device (100) having an improved user interface (106). The device includes a touch pad (106) disposed on a face (104), the touch pad (106) configured to control movement of a cursor on a display formed on a housing of the device. The housing may be configured to have a sloping surface (38) to rest easily in a user's hand while the touch pad (106) is being manipulated.

## Description

### CROSS-REFERENCE TO RELATED APPLICATIONS

This application is related to Application Serial No. 08/944,030, filed October 3, 1997, entitled, "Trackball for Single Digit Control of Wireless Terminals" and Application Serial No. 08/943,328, filed October 3, 1997, entitled "Scroll Select Activate Button for Wireless Terminals," which are hereby incorporated by reference in their entireties as if fully set forth herein.

### BACKGROUND OF THE INVENTION

### Field of the Invention

The present invention relates to wireless terminals and particularly, to control devices for single digit control of a wireless terminal, such as a wireless telephony terminal.

### DESCRIPTION OF THE RELATED ART

Wireless terminals, such as wireless telephony terminals, including cellular telephones and other wireless telecommunication devices, are providing increasingly sophisticated functionality. Along with advances in functionality, such devices are decreasing in size and weight. As the wireless terminals decrease in size, the standard 12-key dial pad is increasingly a limitation. Mechanical switches occupy a large amount of space on the face of wireless terminals, thereby limiting the size to which the wireless terminal housing may be decreased. In particular, as the size of keys on a wireless terminal keypad decreases, a user's ability to individually select the keys also decreases.

Consequently, alternatives to the use of the standard 12-button keypad have been introduced. For example, the Sony CMRX100 telephone employs a dial which is used to scroll through many options on a view screen. Similarly, forward and reverse buttons are provided by the Motorola Startac telephone to accomplish the same task. Finally, the Siemens S4, the Qualcomm QCP800 and QCP1900 each provide a volume button on the side of the wireless terminal which may also be used to scroll through menus on the view screen. Still other wireless terminals provide a trackball on the front face of the wireless terminal to position a cursor on a view screen.

Such menu selection or cursor-pointing devices require hand or finger movements which may be particularly cumbersome in applications such as cellular telephone applications, and do not eliminate the requirement for mechanical devices. Accordingly, there is a need for an improved user interface for a wireless terminal which provides enhanced usability.

### SUMMARY OF THE INVENTION

These drawbacks in the prior art are overcome in large part by a wireless terminal employing a small touch pad. A number may be displayed by dragging the user's finger or thumb across the touch pad in a first direction to increase the number or in another direction to decrease the number. When the desired digit is displayed, a SELECT key may be depressed. Then the next digit is displayed and the process is repeated until all the digits to be dialed have been selected. Pressing a SEND key sends the dial string and the call is placed.

To improve the usability of the touch pad, the touch pad may be configured to define an arc corresponding to the arc of the user's thumb. In addition, an enhanced wireless terminal employing the touch pad may have a relatively long back surface which slopes upward from a back end to a high point and slopes downward from the high point to a front end and to its sides. The curvature and the low end allows the user to advantageously position the wireless terminal. Thus, according to the present invention a wireless terminal is provided which encourages the user to carry the device in such a manner as to provide a feeling of accurate control and responsiveness.

### BRIEF DESCRIPTION OF THE DRAWINGS

A better understanding of the present invention can be obtained when the following detailed description is considered in conjunction with the following drawings in which:
FIG. 1 is a perspective drawing illustrating a wireless terminal according to an embodiment of the present invention;
FIG. 2 is a back perspective of the wireless terminal of FIG. 1;
FIG. 3 is a back view of the wireless terminal of FIG. 1;
FIG. 4 is a rear elevational view of the wireless terminal of FIG. 1;
FIG. 5 is a side elevational view of the wireless terminal of FIG. 1;
FIG. 6 is a top plan view of the wireless terminal of FIG. 1;
FIG. 7 is a block diagram of the wireless terminal of FIG. 1; and
FIG. 8 is a flowchart illustrating operation of an embodiment of the invention.

### DETAILED DESCRIPTION OF THE INVENTION

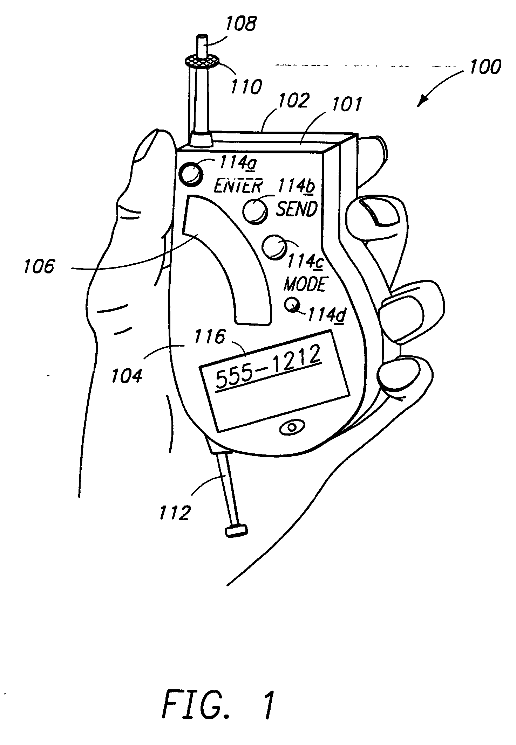

Turning now to the drawings and with particular attention to FIG. 1, a diagram of a wireless terminal 100, such as a wireless telephony terminal, according to an embodiment of the present invention, is shown. Phone numbers and names, for example, in an address book, may be entered using the touch pad 106, as will be explained in greater detail below. Phone numbers may be dialed either by keying in individual digits or accessing names in the address book via a menu on the screen. The wireless terminal 100 includes a housing 101 having a front side 104 and a rear side 102. As shown, the wireless terminal 100 may be generally kidney-shaped. A known touch pad 106 is provided in the front side 104 of the housing. The touch pad 106 may be embodied as a variety of known sensors, such as capacitive analog sensors, surface acoustic wave sensors, or optical sensors. As illustrated, the touch pad 106 is curved such that a user's thumb may be employed to provide controlled movements in an arc along the surface of the touch pad 106. It is noted that, in another embodiment, the touch pad 106 may be "linear" rather than "arcuate." It is further noted that, preferably, the touch pad 106 is configured to control linear movement (only) on the display 116, i.e., scrolling on a menu rather than planar cursor movement. Such a configuration may allow for a smaller touch pad.

A plurality of control buttons 114a-114d are further provided in the front side 104. A view screen 116, such as an LCD display, is provided to display control numbers and the like. The control buttons 114a-114d may be used as an ENTER key, a SEND key, a MODE SELECTION key, and a POWER key for example. It is noted that different configurations of the keys 114a-114d and the touch pad 106 may be employed.

In addition, a microphone boom 112 may be provided to allow for a compact size and ease of use. The boom microphone 112 may be retractable, such as via telescoping, into the housing 100. In addition, an antenna 108 may be provided which may also include a mount for a speaker 110. In an alternative embodiment, the microphone 112 may be provided in the housing 101 itself, or configured to swing or flip from the housing. The speaker 110 may also be provided as a separate boom, or configured to swing or flip from the housing. Thus, FIG. 1 is exemplary only.

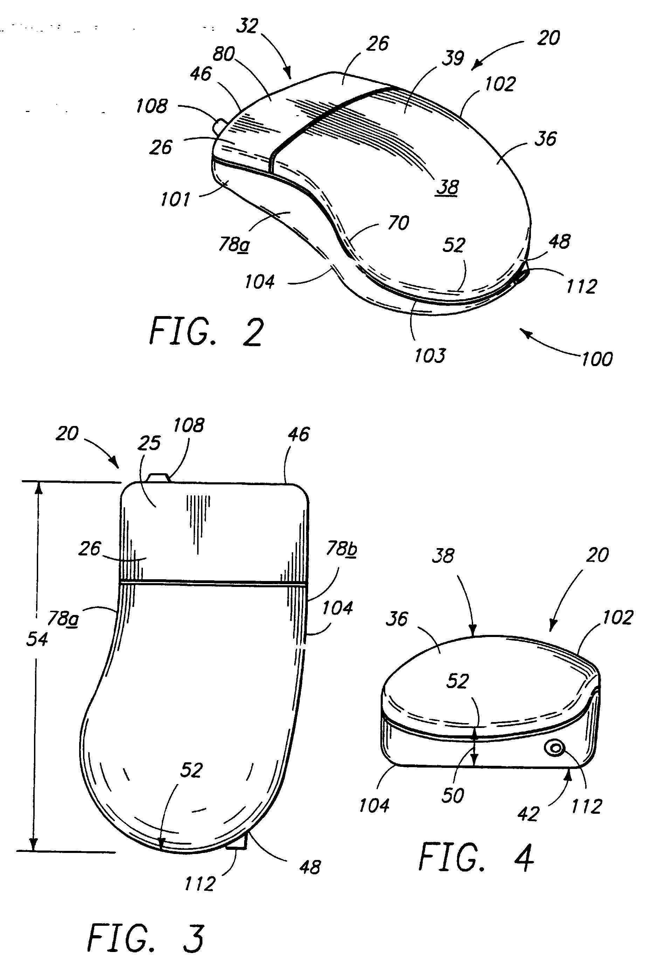

The wireless terminal 100, including the touch pad 106, is shown in greater detail with reference to FIGS. 2-6. As best seen in FIG. 2, the wireless terminal 100 includes a body or housing 101. The housing 101 has a front side 104 and a back side 102. The front side 104 and the back side 102 are formed together at a parting line 103. The front side 104 includes a window aperture for the display 116, an aperture for the touch pad 106 and apertures for the plurality of function keys 114a-114d. In addition, the housing 101 may include apertures for the antenna 108 and microphone 112. The back side 102 includes a back removable cover 39 and a fixed cover 26. The back removable cover 39 may form a cover for a battery chamber or the back side of the battery unit itself. In addition, the back side 102 may be curved from sides 78a to 78b and sides 46, 48 in order to fit the user's palm. In addition, the perimeter of the side 102 may be defined by an edge 70, to minimize contact between a user and sharp edges. In addition, the wireless terminal 100 is defined by a length 54, a height 50, a distance 44 from a high point 38 to the bottom surface 42, and a distance 40 from the high point 38 to the front end 32.

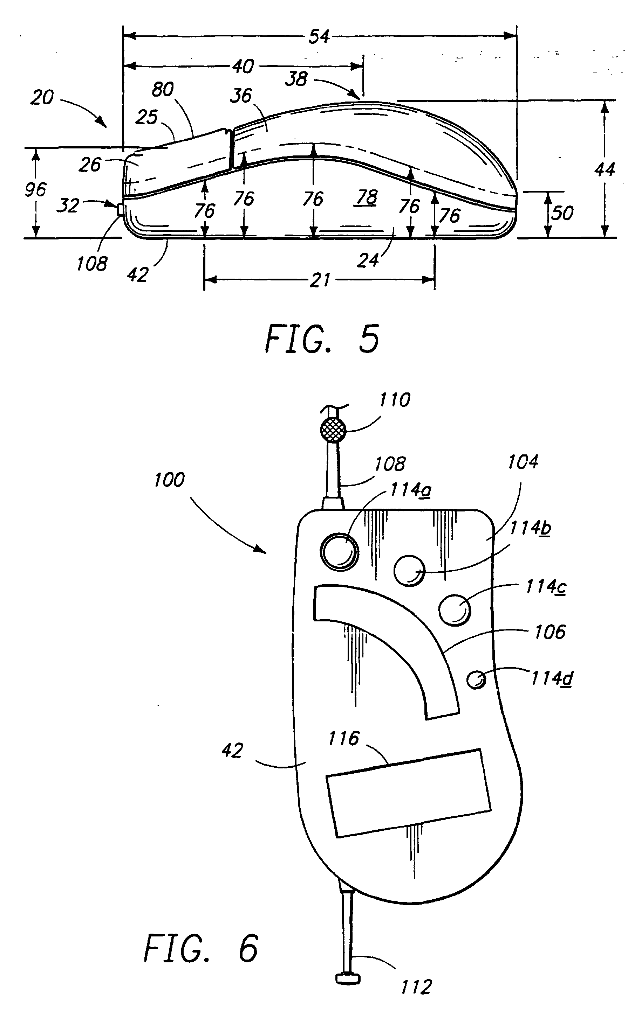

An important aspect of the invention is the relatively small form factor for the wireless telephony terminal. In particular, the length 54 of the wireless terminal 100 is measured along the bottom surface 42 from a most forward point to a most rearward point and may be about 4.5 inches long. The height 50 at the back end 34 is measured between a most rearward point 52 of the back edge 48 and the top surface 42. The height 50 may be about 1/2-inch. As illustrated in FIG. 5, the distance 44 from the high point 38 to the top surface 42 is measured along the line perpendicular to the top surface 42 and may be about 1-1/2-inches. The distance 40 from the high point 38 to the front end 32 may be about 2-3/4-inches. As illustrated in FIG. 5, the distance 96 from a point 25 located approximately at the center of the top portion 26 to the top surface 42 is about an inch. As illustrated, the embodiment shown may have a minimum height 76 of about an inch measured between the back surface 36 and the top surface 42 along the sides 78 of the wireless terminal 100 in a region 21 from about .8 inch rearward of the front end 32 to about 3.5 inches rearward of the front end 32. In addition, it is noted that texturing, such as by a molded or rubber grip may be provided along the edge or sides of the wireless terminal. Further, it is noted that these dimensions may vary.

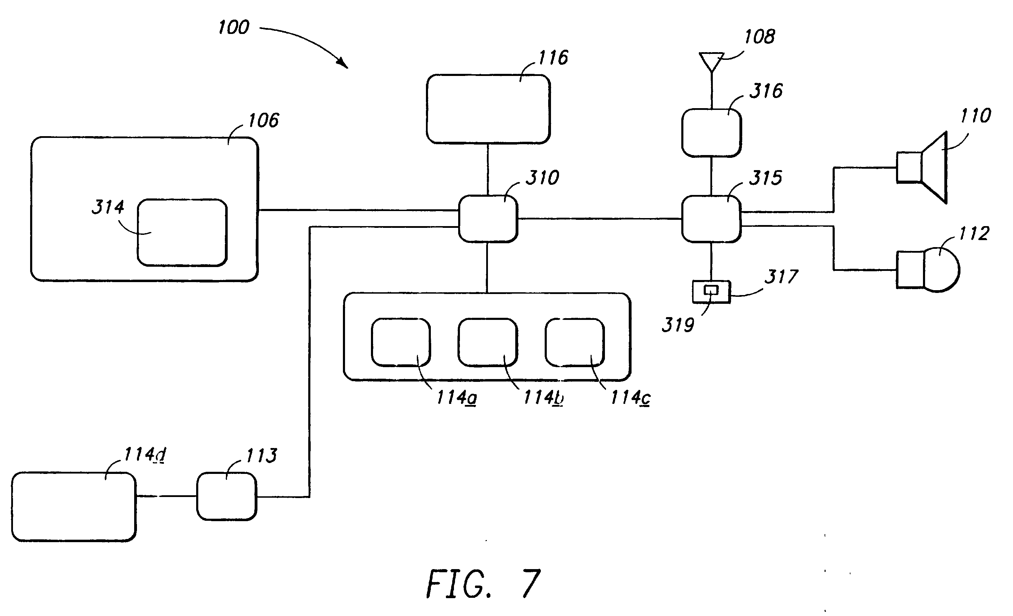

Turning now to FIG. 7, a block diagram of the wireless terminal 100 employing a touch pad 106 according to the present invention is illustrated. The touch pad 106 includes a movement translator 314 configured to identify and convert movements on the surface of the touch pad 106 into movement on the view screen 116. The movement translator 314 is coupled to an input controller 310. A plurality of switches 114a-114c are further coupled to the input controller 310. As discussed above, the switches 114a-114c may include SELECT, ENTER and MODE keys.

The wireless terminal 100 further includes an ON/OFF or POWER switch 114d, which is coupled to a power supply 113, which, in turn, is coupled to provide power to other functional units of the wireless terminal 100. In addition, the wireless terminal 100 includes a transceiver and modulator unit 316 coupled to a control processor 315, which, in turn, is coupled to the input controller 310. A microphone 112 and a speaker 110 are also coupled to the control processor 315. The control processor 315 may include a central processing unit and a variety of other known control circuitry (not shown). In addition, the control processor 315 is coupled to one or more memory units 317. In the case of the cellular telephone, for example, such control circuitry may be provided to control the switching and registering of a telephone call between cells. The touch pad 106 is thus operable, for example, to dial a telephone via a video menu on the screen 116.

The above features work together to provide a wireless terminal 100 that accommodates a wide range of users allowing them to grasp and manipulate the wireless terminal control in a comfortable position. The relatively low height 50 of the back end 34 and the gentle slope upward to the high point 38 provide for a comfortable grip such that the bulge created by the high point 38 and surrounding curvature supports the user's hand. The arc-shaped touch pad 106 permits the user to comfortably activate the wireless terminal controls.

In particular, in a first mode, digits and letters corresponding to the standard twelve telephone keys may be displayed on the screen 116. The user may select a number or letter by dragging his or her finger or thumb across the touch pad 106 in a first direction to increase the number or in another direction to decrease the number. For example, sensed movement along the touch pad 106 may correspond to memory locations in a look up table 319 stored in the memory 317. The movements on the touch pad 106 thus control a pointer in memory 307 corresponding to digits or other characters, or sets of characters being displayed. When a desired digit is displayed or highlighted, the SELECT key 114a may be depressed. Then, the next digit may be displayed and the process repeated until all the digits to be dialed have been selected. Pressing the SEND key 114b sends the dial string to make the call.

As discussed above, the user may employ the touch pad 106 in conjunction with the switches or function keys 114a-114c to key in telephone numbers, make telephone calls and set and select numbers in an address book.

In a second mode of operation, the user may use the touch pad 106 in conjunction with the display 116 to enter names and phone numbers in an address book. For example, selecting the mode key 114c may allow the user to enter the address entry option. More particularly, selection of the mode key 114c may cause a sequence of digits 0 through 9 and alphabetic characters a through z to appear or be accessible on the screen 116. The user may move a cursor or highlight the corresponding name and number. For example, in one embodiment the name is entered first letter by letter, the ENTER key is depressed once to enter the name, and then the corresponding number is selected. Once the user's address book entries have been made, the user may use the address book to select numbers to be called. For example, pressing the mode key again may cause the list of names and numbers to appear, for example, in alphabetical order on the view screen 116. The touch pad 106 may be used to scroll through the corresponding menu options and select the number which is to be called. The system then dials the corresponding number. Thus, the one or more memory units 317 may include one or more read only memory units which provide, for example, a look up table of numbers and characters including, for example, the (*) and (#) keys. The one or more memory units 317 may further include memory locations suitable for storing user input names and telephone numbers.

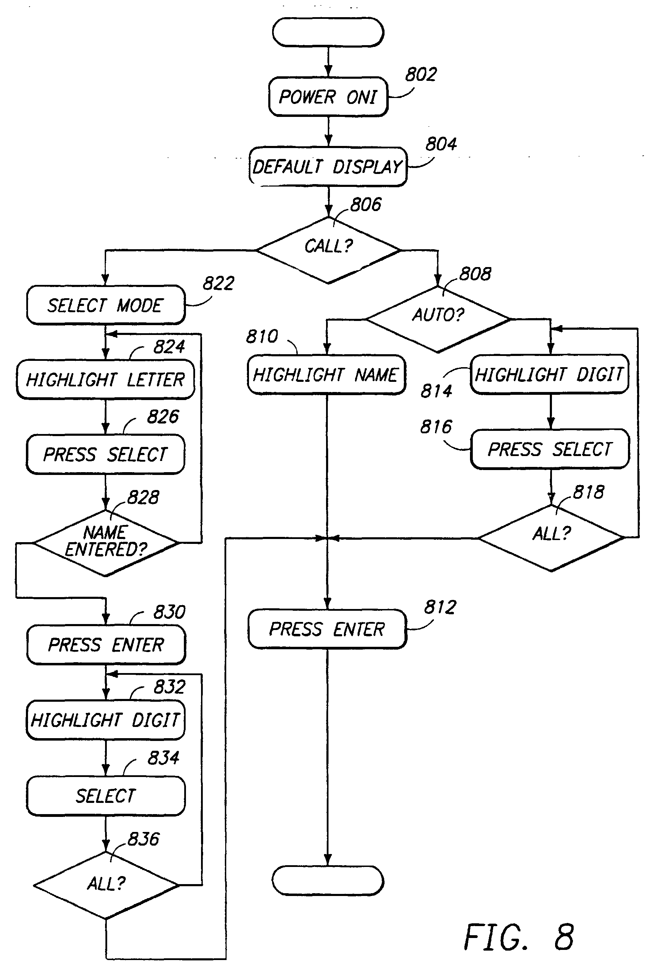

For example, turning now to FIG. 8, a flowchart illustrating operation of an embodiment of the invention is shown. In a step 802, the power is activated, for example, by the user pressing the POWER key 114d. In a step 804, the control processor 315 may enter a default display mode. As an example, the default display may be the 12-key telephone display or may be a mode select menu (in that case, the MODE select key would not be necessary). Assuming, however, that the default display is the 12-key keypad, in a step 806, the user may be given the option of making a telephone call. In a step 808, the user is presented the option of auto-dialing or individually keying in the telephone number. If the user selects the AUTO option (for example, by pressing the MODE key), the user may use the keypad 106 to highlight a name in a step 810. The control processor 315 accesses the address book from the memory 317 and displays the names of the display 116. Once the correct name has been highlighted, the user may make the phone call by pressing the ENTER key in a step 812. If, in step 808, the user had not selected the auto-dialer, then in a step 814 the user is presented with the keypad and must highlight the appropriate digit in a step 814. In a step 816, the user presses the SELECT key in order to select the corresponding digit. In a step 818, the user is given the option of accepting the phone number he has selected in steps 814 and 816. If so, the user may activate the ENTER key in a step 812. Once the ENTER key has been pressed, the control processor 315 will cause the number to be dialed. If, however, in step 818, all digits have not been entered, then the user may select another digit by repeating steps 814 and 816.

Back in step 806, if the user had not wished to make a phone call but instead wished to enter names into the address book (for example, by selecting the MODE key), the user may enter the SET ADDRESS BOOK mode in a step 822. This causes the processor 315 to access the memory 317 for the alphabetic characters; In a step 824, the user may use the touch pad 106 to highlight individual letters. Again, movements on the touch pad 307 are translated into corresponding memory locations. In a step 826, the user may select the appropriate highlighted letter, for example, by pressing the SELECT key. In a step 828, the user is provided the option of accepting the number or letter or continuing selection through steps 824 and 826. If, however, the user wishes to accept the name, then in a step 830, the user may press the ENTER key. Next, in a step 832, the user is presented with digits 0 through 9 in order to enter the telephone number corresponding to the name just entered. Thus, in a step 832, the user may highlight the appropriate digit and in a step 834 select the number by pressing the SELECT key. In a step 836, the user is given the option of accepting the number, in which case the user presses the ENTER key in a step 812. If the user wishes to continue entering numbers, then the user may repeat steps 832 and 834.

The invention described in the above detailed description is not intended to be limited to the specific form set forth herein, but is intended to cover such alternatives, modifications, and equivalents as can reasonably be included within the spirit and scope of the appended claims. For example, while shown as a cellular telephone, the wireless terminal may embody a variety of devices, such as remote controls or other radio telephones, such as cordless telephones or PCS devices.

## Claims

1. A wireless terminal configured to fit a user's palm, comprising:
a housing having a face;
a display on said face of said housing; and
a touch pad on said housing configured to control selection of functions shown on said display, said touch pad disposed to be operable by a user's thumb such that said user need not reposition said housing to operate said touch pad.

2. A wireless terminal according to Claim 1, said touch pad forming an arc across a face of said housing.

3. A wireless terminal according to Claim 1, said touch pad forming a linear strip across a face of said housing.

4. A wireless terminal according to Claim 1, said housing having a back surface that slopes upward from a front end to a high point and downward from said high point to a back end.

5. A wireless terminal according to Claim 4, said housing including a relatively planar front surface.

6. A wireless terminal according to Claim 5, wherein said front surface of said housing is generally kidney-shaped.

7. A wireless terminal according to Claim 6, including an extendable boom microphone.

8. A wireless terminal according to Claim 7, including a speaker.

9. An electronic device, comprising:
a housing having a generally planar first face and a generally non-planar second face;
a display formed on said first face; and
a touch pad configured to control linear movements on said display.

10. An electronic device as recited in Claim 9, said second face sloping upward from a front end to a high point and downward from said high point to a back end.

11. An electronic device as recited in Claim 10, further including a controller for supervising communications between said electronic device and a remote party.

12. An electronic device as recited in Claim 11, including an extendable microphone and speaker.

13. A wireless telephony device, comprising:
a housing having a form factor configured to fit in a user's palm;
a display set in a face of said housing;
a touch pad; and
means for translating finger movements on said touch pad into memory positions, said memory positions identifying one or more characters displayed on said display.

14. a wireless telephony device in accordance Claim 13, said translating means including a pointer for pointing to said memory positions.
